# EUROPÄISCHE PATENTANMELDUNG

(11) **EP 0 993 774 A1**
(43) Veröffentlichungstag der Anmeldung: **19.04.2000**
(21) Anmeldenummer: 98890297.9
(22) Anmeldetag: 14.10.1998
(51) Int. Cl.: A01K 63/04

(54) **Verfahren zum Reinigen des Kiesbettes eines mit Wasser gefüllten Aquariums und Aquarium zur Durchführung des Verfahrens**

(71) Anmelder: Kronberger, Franz, 5162 Obertrum (AT)
(72) Erfinder: Kronberger, Franz, 5162 Obertrum (AT)
(74) Vertreter: Hübscher, Heiner, Dipl.-Ing.

(57) **Zusammenfassung**

Es wird ein Verfahren zum Reinigen des Kiesbettes (9) eines mit Wasser gefüllten Aquariums mit Hilfe von Spülwasser beschrieben, das von unten durch das Kiesbett (9) geleitet wird. Um vorteilhafte Reinigungsbedingungen zu schaffen, wird vorgeschlagen, daß das Spülwasser über die Grundfläche des Kiesbettes (9) verteilt durch das Kiesbett (9) gedrückt und im Oberflächenbereich des Kiesbettes (9) wieder abgesaugt wird.

## Beschreibung

Die Erfindung bezieht sich auf ein Verfahren zum Reinigen des Kiesbettes eines mit Wasser gefüllten Aquariums mit Hilfe von Spülwasser, das von unten durch das Kiesbett geleitet wird, sowie auf ein Aquarium zur Durchführung des Verfahrens.

Um das Wasser eines Aquariums zu pflegen, wird es in einem Wasserkreislauf über ein Reinigungsfilter gepumpt. Zu diesem Zweck ist es bekannt (GB 2 232 862 A, US 3 722 685 A, US 5 179 911 A), oberhalb des Bodens des Aquariumgehäuses einen Lochboden vorzusehen, über den das Wasser mit den sich absetzenden Verunreinigungen abgesaugt wird. Nachteilig bei diesen bekannten Aquarien ist vor allem, daß beim Vorsehen eines Kiesbettes auf dem Lochboden die Verunreinigungen aus dem Gehäuse durch das Kiesbett abgesaugt werden müssen, was zwangsläufig zu einer Verunreinigung des Kiesbettes führt. Dies gilt auch für Aquarien (US 3 722 685), bei denen sowohl die Druck- als auch die Saugleitung des vorgesehenen Wasserkreislaufes im Raum unterhalb des Lochbodens münden, weil die Verunreinigungen, die zunächst durch das über die Druckleitung zugeführte Spülwasser von unten aus dem Kiesbett ausgewaschen werden anschließend wieder durch das Kiesbett von oben nach unten abgesaugt werden müssen. Das Kiesbett bildet dabei eine Filterschicht, in der Verunreinigungen zurückgehalten werden, wodurch das Wachstum von Keimen und Bakterien unterstützt wird. Die Ablagerungen im Kiesbett führen dazu, daß das Kiesbett regelmäßig gereinigt werden muß.

Der Erfindung liegt somit die Aufgabe zugrunde, ein Verfahren zum Reinigen des Kiesbettes eines mit Wasser gefüllten Aquariums der eingangs geschilderten Art so auszugestalten, daß die Abfuhr der Verunreinigungen von der Kiesbettoberfläche und aus dem Kiesbett entscheidend verbessert werden kann.

Die Erfindung löst die gestellte Aufgabe dadurch, daß das Spülwasser über die Grundfläche des Kiesbettes verteilt durch das Kiesbett gedrückt und im Oberflächenbereich des Kiesbettes wieder abgesaugt wird.

Da die Spülflüssigkeit über die Kiesbettgrundfläche gleichmäßig verteilt von unten nach oben durch das Kiesbett gedrückt wird, werden in vorteilhafter Weise die Verunreinigungen aus dem Kiesbett ausgeschwemmt, wobei durch die unmittelbare Absaugung im Bereich der Kiesbettoberfläche nicht nur eine neuerliche Verschmutzung des Kiesbettes durch die ausgewaschenen Verunreinigungen wirksam verhindert, sondern auch eine gute Absaugung der sich auf der Kiesbettoberfläche ablagernden Verschmutzung gewährleistet wird. Besonders gute Reinigungswirkungen können erzielt werden, wenn mit dem Spülwasser Luft durch das Kiesbett geleitet wird, weil die Luft einerseits das Ablösen allfälliger Verunreinigungen vom Kies des Kiesbettes unterstützt und anderseits für eine gegenseitige Verschiebung der Kieskörner sorgt.

Zur Durchführung dieses Verfahrens kann von einem Aquarium ausgegangen werden, das aus einem mit Wasser gefüllten Gehäuse, in das ein ein Kiesbett aufnehmender Lochboden mit Abstand oberhalb des Gehäusebodens angeordnet ist, aus einer unterhalb des Lochbodens mündenden Zuleitung für Spülwasser sowie aus einer Saugleitung zum Absaugen des Spülwassers besteht. Wird bei einem solchen Aquarium die Saugleitung mit Ansaugdüsen versehen, die das Kiesbett durchsetzen und im Bereich der Kiesbettoberfläche münden, so kann in einfacher, den Wasserraum des Aquariums nicht beeinträchtigender Weise die Absaugung des Spülwassers aus dem Oberflächenbereich des Kiesbettes vorgenommen werden. Das durch den Lochboden zuströmende Umlaufwasser verhindert eine Ablagerung von Verunreinigungen auf dem Kiesbett und unterstützt zugleich das Austragen dieser Verunreinigungen, weil sich oberhalb des Kiesbettes eine Wasserströmung vom Kiesbett zu den Ansaugdüsen ausbildet. Bei einer entsprechenden Verteilung der Ansaugdüsen über die Grundfläche des Gehäuses kann daher ein sehr wirksamer Abzug der anfallenden Wasserverunreinigungen aus dem Gehäuse und damit eine gute Reinigung sichergestellt werden. Dies gilt insbesondere, wenn sich die Ansaugdüsen in Strömungsrichtung erweitern, weil in diesem Fall eine Verstopfung der Ansaugdüsen mit angesaugten Teilchen einfach verhindert werden kann.

Besonders einfache Konstruktionsverhältnisse ergeben sich, wenn die Ansaugdüsen den Lochboden durchsetzen und an eine innerhalb des Raumes zwischen Lochboden und Gehäuseboden vorgesehene Ansaugkammer angeschlossen werden, so daß im Kiesbett keine zusätzlichen Leitungen zum Anschluß der Ansaugdüsen verlegt werden müssen. Obwohl die Ansaugkammer, in der ja lediglich das Spülwasser aus den Ansaugdüsen gesammelt wird, unterschiedlich gestaltet werden kann, ergeben sich besonders vorteilhafte Konstruktionsbedingungen, wenn die Ansaugkammer zwischen dem Gehäuseboden und einem diesen abdeckenden Zwischenboden gebildet wird, von dem die Ansaugdüsen aufragen. Der Lochboden kann dann auf die Ansaugdüsen aufgesteckt werden, so daß sich ein einfacher, vormontierbarer Einsatz für das Aquariumgehäuse ergibt.

Um mit dem Spülwasser Luft durch den Kiesboden durchleiten zu können, womit die Reinigungsleistung erheblich gesteigert werden kann, kann der Raum unterhalb des Lochbodens an eine Luftleitung angeschlossen werden. Wird dazu die Zuleitung für das Spülwasser benützt, so kann die Luftmitnahme über eine Injektordüse durch das Spülwasser sichergestellt werden. Sonst ist eine entsprechende Druckluftquelle erforderlich, um die Luft in den Raum unterhalb des Lochbodens drücken zu können. Damit eine gleichmäßige Reinigungswirkung über die Kiesbettfläche erzielt werden kann, ist für eine gleichmäßige Luftverteilung über den Lochboden zu sorgen. Zu diesem Zweck kann der Lochboden über seine Fläche verteilte, nach oben gerichtete Ausformungen mit Durchtrittsöffnungen im Scheitelbereich bilden. Die Luft im Raum unterhalb des Lochbodens sammelt sich nämlich im Bereich der nach oben gerichteten Ausformungen des Lochbodens, so daß die Luft aus den in diesen Ausformungen gebildeten Luftkammern durch die Durchtrittsöffnungen im Scheitelbereich der Ausformungen in Form von feinen Bläschen das Kiesbett durchdringt und durch das Aquariumwasser aufsteigt, und zwar über die Grundfläche des Aquariumgehäuses verteilt, weil ja die Ausformungen über die Lochbodenfläche verteilt angeordnet sind. Die Größe der Durchtrittsöffnungen bestimmt dabei die Feinheit der Luftbläschen.

Damit Pflanzen einfacher im Kiesbett verankert werden können, kann der Lochboden topfartige Aufnahmen für Pflanzen bilden.

Anhand der Zeichnung wird das erfindungsgemäße Verfahren näher erläutert.
Es zeigen
- Fig. 1: ein erfindungsgemäßes Aquarium zur Durchführung des Verfahrens in einem vereinfachten Schaubild,
- Fig. 2: ein solches Aquarium ausschnittsweise in einem Vertikalschnitt in einem größeren Maßstab und
- Fig. 3: eine der Fig. 2 entsprechende Darstellung einer Konstruktionsvariante.

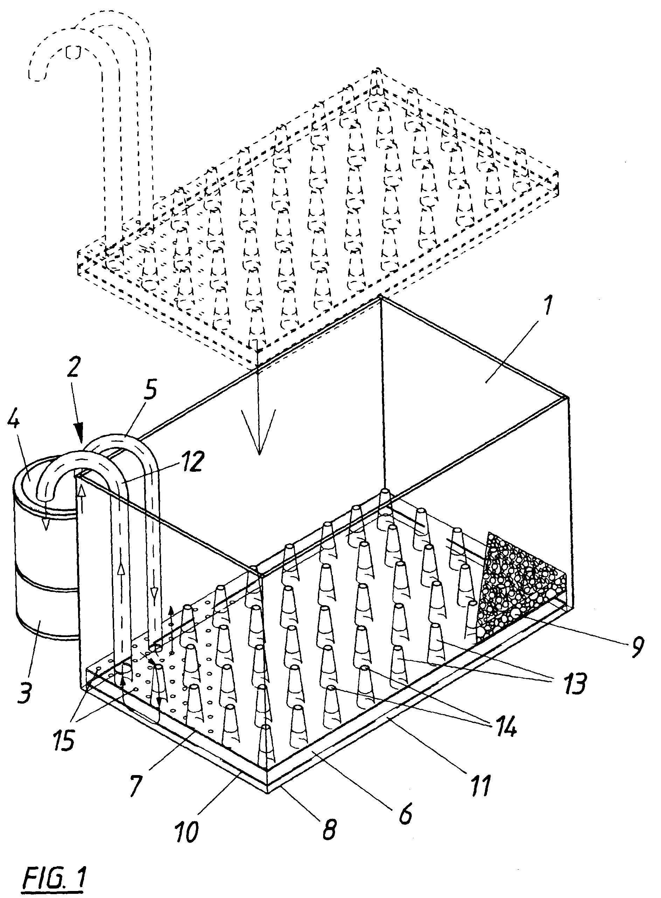

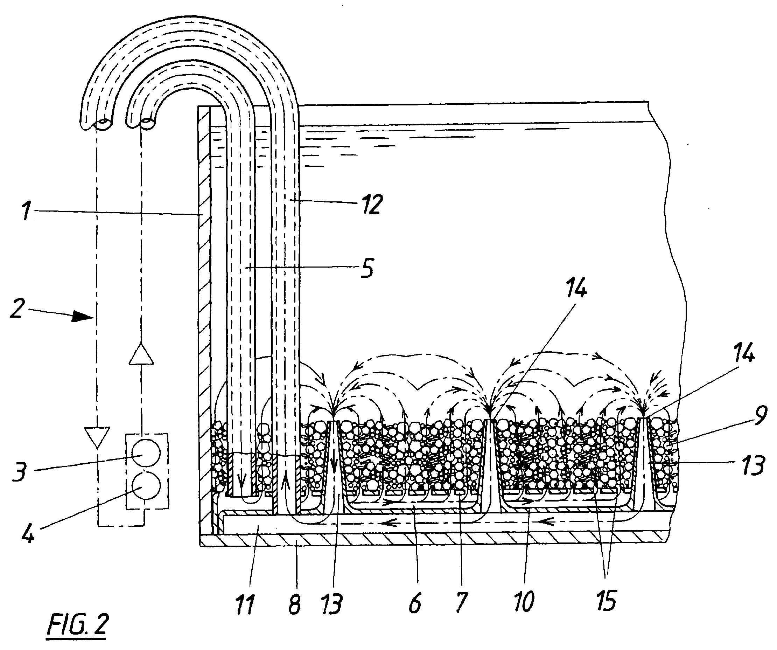

Das dargestellte Aquarium weist ein Gehäuse 1 mit einem Wasserkreislauf 2 auf, der eine Wasserumlaufpumpe 3 und ein Reinigungsfilter 4 umfaßt. Die von der Wasserumlaufpumpe 3 in das Gehäuse 1 geführte Zuleitung 5 mündet in einem Raum 6 unterhalb eines Lochbodens 7, der mit Abstand oberhalb des Gehäusebodens 8 angeordnet ist und ein Kiesbett 9 aufnimmt. Zwischen dem Lochboden 7 und dem Gehäuseboden 8 ist ein Zwischenboden 10 vorgesehen, der vom Raum 6 eine Ansaugkammer 11 flüssigkeitsdicht abtrennt. Die Ansaugkammer 11 ist an die Saugleitung 12 des Wasserkreislaufes 2 angeschlossen. Vom Zwischenboden 10 ragen sich in Strömungsrichtung konisch erweiternde Ansaugdüsen 13 auf, die gleichmäßig über den Zwischenboden 10 verteilt sind. Diese Ansaugdüsen 13 durchsetzen nicht nur den Lochboden 7, sondern auch das Kiesbett 9, wobei die Anordnung so getroffen ist, daß die Ansaugmündungen 14 der Ansaugdüsen 13 im Bereich der Kiesbettoberfläche zu liegen kommen, wie dies der Fig. 2 entnommen werden kann. Der Zwischenboden 10 und der auf die Ansaugdüsen 13 aufgesteckte Lochboden 7 bilden mit entsprechenden Anschlüssen für die Zuleitung 5 und die Saugleitung 12 eine vormontierbare Baueinheit, die lediglich in das Gehäuse 1 einzusetzen ist, wie dies strichliert in der Fig. 1 angedeutet wird. Nach dem Einsetzen dieser Baueinheit kann das Kiesbett 9 in einer der überstehenden Länge der Ansaugdüsen 13 entsprechenden Höhe eingebracht werden, so daß die Ansaugdüsen 13 im Bereich der Kiesbettoberfläche münden. Nach einem Anschluß der Wasserumlaufpumpe 3 und des Reinigungsfilters 4 kann das Aquarium in Betrieb genommen werden.

Wie die angedeuteten Strömungspfeile in der Fig. 2 erkennen lassen, greift die Saugströmung durch die Ansaugdüsen 13 auf oberflächennahen Bereiche des Kiesbettes 9 durch, wobei diese Wasserströmungen im Oberflächenbereich des Kiesbettes 9 durch das aus dem Raum 6 über den Lochboden 7 zuströmende, gereinigte Umlaufwasser unterstützt wird. Das im Reinigungsfilter 4 gereinigte und über die Wasserumlaufpumpe 3 in den Raum 6 gepumpte Spülwasser tritt nämlich durch die Durchtrittslöcher 15 der Lochplatte 7 in das Kiesbett 9 ein, das aufwärts durchströmt wird, so daß sich allenfalls auf dem Kiesbett 9 abgesetzte Verunreinigungen ausgewaschen und gegen die Ansaugdüsen 13 gespült werden. Da die über die Ansaugdüsen 13 abgesaugte Wassermenge über den Lochboden 7 zugeführt wird, beschränkt sich die Reinigungsströmung auf einen oberflächennahen Bereich des Kiesbettes 9, ohne einen allmählichen Austausch des gesamten Wasservolumens des Gehäuses 1 zu verhindern. Damit wird in vorteilhafter Weise erreicht, daß gegen das Kiesbett 9 absinkende Verunreinigungen meist sofort von den Ansaugdüsen 13 an der Kiesbettoberseite abgesaugt werden, was das Entstehen von Keimen und Bakterien stark vermindert. Das Kiesbett 9 bleibt daher von Verunreinigungen frei, so daß sich mühselige Reinigungsarbeiten erübrigen. Durch die sich in Strömungsrichtung konisch erweiternden Ansaugdüsen 13 wird eine Verlegung dieser Ansaugdüsen durch eingesaugte Verunreinigungen vermieden.

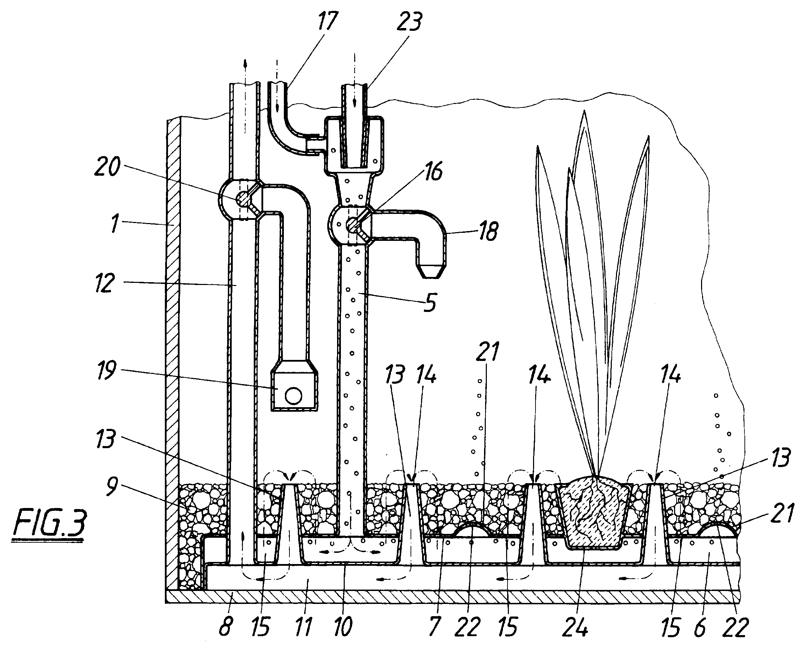

Die Reinigung des Kiesbettes 9 kann aber auch nur periodisch durchgeführt werden, wofür sich ein in der Fig. 3 dargestelltes Aquarium besonders eignet. Die Zuleitung 5 kann im Bedarfsfall über ein Umschaltventil 16 an die Pumpenleitung 17 oder an eine andere Wasserversorungsleitung angeschlossen werden, um die Spülung des Kiesbettes 9 in der beschriebenen Weise durchzuführen. Im üblichen Betrieb kann im Aquarium eine Umlaufströmung über einen Auslaufstutzen 18 bzw. einen Ansaugstutzen 19 der Zuleitung 5 bzw. der Saugleitung 12 aufrechterhalten werden, wenn die Umschaltventile 16 und 20 in der Zuleitung 5 bzw. der Saugleitung 12 entsprechend umgestellt sind.

Der Lochboden 7 ist gemäß der Fig. 3 mit nach oben gerichteten Ausformungen 21 versehen, die im Ausführungsbeispiel Kugelkalotten darstellen und gleichmäßig über die Lochbodenfläche verteilt sind. Im Scheitelbereich dieser Ausformungen 21 sind Durchtrittslöcher 22 vorgesehen, so daß bei einem Anschluß der Zuleitung 5 an eine Luftleitung 23 Luft in den Raum 6 unterhalb des Lochbodens 7 geführt werden kann, und zwar zufolge einer Injektorwirkung, wenn keine entsprechende Druckluftquelle eingesetzt wird. Die sich im Spülwasser bildenden Luftbläschen wandern über den Lochboden 7 und sammeln sich im Bereich der Ausformungen 21 zu Luftkammern an, aus denen Luft durch das Kiesbett 9 strömt, was zu einer Verstärkung des Reinigungseffektes führt. Die durch die Durchtrittsöffnungen 22 im Scheitelbereich der Ausformungen 21 durchtretenden Luftbläschen bedingen eine gegenseitige Bewegung der Körner des Kiesbettes, was einen mechanischen Abrieb von Verunreinigungen von den Kiesbettkörnern zur Folge hat. Abgesehen davon unterstützten die Luftbläschen selbst den Ablöse- und Mitnahmevorgang.

Um die Ansaugdüsen 13 zu reinigen, wenn sich trotz ihrer in Strömungsrichtung konischen Erweiterung Ablagerungen ansetzen, können diese Ansaugdüsen 13 rückgespült werden, indem beispielsweise die Saugleitung 12 an die Leitung 17 für das Spülwasser angeschlossen wird. Wird dabei mit dem Spülwasser wieder Luft durch die Ansaugdüsen 13 geführt, so kann die verstärkte Reinigungswirkung der Luftbläschen im Spüwasser auch für die Rückspülung der Ansaugdüsen 13 ausgenützt werden.

Bildet der Lochboden 7 zusätzlich topfartige Aufnahmen 24 für Wasserpflanzen, so kann auch das Einsetzen von Pflanzen in das Kiesbett 9 erheblich vereinfacht werden.

## Patentansprüche

1. Verfahren zum Reinigen des Kiesbettes (9) eines mit Wasser gefüllten Aquariums mit Hilfe von Spülwasser, das von unten durch das Kiesbett (9) geleitet wird, dadurch gekennzeichnet, daß das Spülwasser über die Grundfläche des Kiesbettes (9) verteilt durch das Kiesbett (9) gedrückt und im Oberflächenbereich des Kiesbettes (9) wieder abgesaugt wird.

2. Verfahren nach Anspruch 1, dadurch gekennzeichnet, daß mit dem Spülwasser Luft durch das Kiesbett (9) geleitet wird.

3. Aquarium, zur Durchführung des Verfahrens nach Anspruch 1 oder 2, bestehend aus einem mit Wasser gefüllten Gehäuse (1), in das ein ein Kiesbett (9) aufnehmender Lochboden (7) mit Abstand oberhalb des Gehäusebodens (8) angeordnet ist, aus einer unterhalb des Lochbodens (7) mündenden Zuleitung (5) für Spülwasser sowie aus einer Saugleitung (12) zum Absaugen des Spülwassers, dadurch gekennzeichnet, daß die Saugleitung (12) mit Ansaugdüsen (13) in Verbindung steht, die das Kiesbett (9) durchsetzen und im Bereich der Kiesbettoberfläche münden.

4. Aquarium nach Anspruch 3, dadurch gekennzeichnet, daß sich die Ansaugdüsen (13) in Strömungsrichtung konisch erweitern.

5. Aquarium nach Anspruch 3 oder 4, dadurch gekennzeichnet, die Ansaugdüsen (13) den Lochboden (7) durchsetzen und an eine innerhalb des Raumes (6) unter dem Lochboden (7) vorgesehene Ansaugkammer (11) angeschlossen sind.

6. Aquarium nach Anspruch 5, dadurch gekennzeichnet, daß die Ansaugkammer (11) zwischen dem Gehäuseboden (8) und einem diesen abdeckenden Zwischenboden (10) gebildet wird, von dem die Ansaugdüsen (13) aufragen, und daß der Lochboden (7) auf die Ansaugdüsen (13) aufsteckbar ist.

7. Aquarium nach einem der Ansprüche 3 bis 6, dadurch gekennzeichnet, daß der Raum (6) unterhalb des Lochbodens (7) vorzugsweise über die Zuleitung (5) für das Spülwasser an eine Druckluftleitung (23) anschließbar ist.

8. Aquarium nach Anspruch 7, dadurch gekennzeichnet, daß der Lochboden (7) über seine Fläche verteilte, nach oben gerichtete Ausformungen (21) mit Durchtrittsöffnungen (22) im Scheitelbereich bildet.

9. Aquarium nach einem der Ansprüche 1 bis 7, dadurch gekennzeichnet, daß der Lochboden (7) topfartige Aufnahmen (24) für Pflanzen bildet.
